# EUROPÄISCHE PATENTANMELDUNG

(11) **EP 3 699 699 A1**
(43) Veröffentlichungstag der Anmeldung: **26.08.2020**
(21) Anmeldenummer: 19157949.9
(22) Anmeldetag: 19.02.2019
(51) Int. Cl.: G05B 17/02

(54) **VERFAHREN ZUM BEREITSTELLEN EINES MODELLS FÜR ZUMINDEST EINE MASCHINE, TRAININGSSYSTEM, VERFAHREN ZUM SIMULIEREN EINES BETRIEBS EINER MASCHINE SOWIE SIMULATIONSSYSTEM**

(71) Anmelder: Siemens Aktiengesellschaft, 80333 München (DE)
(72) Erfinder: Raharja, Pandu, 85354 Freising (DE)

(57) **Zusammenfassung**

Die Erfindung betrifft ein Verfahren zum Bereitstellen eines Modells (M_{A}, M_{A,B}) für zumindest eine Maschine (A, B), insbesondere eine Werkzeugmaschine, wobei ein Betrieb der Maschine (A) mittels einer Reglervorrichtung (2) geregelt wird, mit den Schritten: Empfangen einer zeitlichen Serie von Messwerten (X_{A}), wobei die Messwerte (X_{A}) eine Betriebsgröße der Maschine (A) beschreiben, Bereitstellen eines untrainierten Modells (M_{U}) in Form eines künstlichen neuronalen Netzes, Trainieren des untrainierten Modells (Mu) anhand der empfangenen Messwerte (X_{A}) und Bestimmen von abgeleiteten Regelgrößen (θ'_{A}), welche die Reglervorrichtung (2) beschreiben, mittels des trainierten Modells (M_{A}). Zudem betrifft die Erfindung ein Verfahren zum Simulieren einer Maschine (A, B).

## Beschreibung

Die vorliegende Erfindung betrifft ein Verfahren zum Bereitstellen eines Modells für zumindest eine Maschine, insbesondere eine Werkzeugmaschine. Des Weiteren betrifft die vorliegende Erfindung ein Trainingssystem, ein Computerprogramm sowie ein computerlesbares (Speicher)medium. Darüber hinaus betrifft die vorliegende Erfindung ein Verfahren zum Simulieren eines Betriebs einer Maschine. Außerdem betrifft die vorliegende Erfindung ein Simulationssystem sowie ein dazugehöriges Computerprogramm.

Aus dem Stand der Technik ist es bekannt, dass der Betrieb einer Maschine mittels eines Reglers beziehungsweise einer Reglervorrichtung geregelt wird. Insbesondere im Zusammenhang mit Werkzeugmaschinen, beispielsweise CNC-Maschinen, werden komplexe Regelvorrichtungen verwendet. Derartige Reglervorrichtungen, wie sie in Werkzeugmaschinen vorgesehen sind, umfassen komplex aufgebaute Regler, welche mehrere einzelne Regler beziehungsweise Regelkreise aufweisen können. Wenn eine derartige Werkzeugmaschine von einem Hersteller bezogen wird, sind üblicherweise keine näheren Informationen zu der darin verwendeten Reglervorrichtung vorhanden. Bei der Verwendung einer solchen Werkzeugmaschine ist es oft wünschenswert, genauere Informationen zu der Reglervorrichtung zu erhalten.

Um den Betrieb der elektrischen Maschine, der mit der Reglervorrichtung geregelt wird, nachzubilden, können grundsätzlich Verfahren des maschinellen Lernens verwendet werden. Im Betrieb der Maschine ist es beispielsweise möglich, eine zeitliche Serie von Messwerten zu erfassen, wobei die Messwerte Betriebsgrößen beziehungsweise einen Betriebszustand der Maschine beschreiben. Um aus diesen Messwerten beziehungsweise Betriebsgrößen das Verhalten der Reglervorrichtung ableiten zu können, können die Verfahren des maschinellen Lernens genutzt werden. Beispielsweise kann hier die lineare Regression, bei der entweder ein linearer oder ein nicht-linearer Kernel genutzt werden kann, bekannt. Das Training eines entsprechenden Modells, mittels welchem die Reglervorrichtung abgebildet werden kann, ist oftmals sehr aufwändig und kompliziert, insbesondere bei komplexen Reglervorrichtungen, wie sie bei Werkzeugmaschinen verwendet werden.

Es ist Aufgabe der vorliegenden Erfindung, eine Lösung aufzuzeigen, wie der Betrieb einer Maschine, welche mittels einer Reglervorrichtung geregelt wird, einfacher und gleichzeitig zuverlässig modelliert werden kann.

Diese Aufgabe wird erfindungsgemäß durch ein Verfahren zum Bereitstellen eines Modells, durch ein Trainingssystem, durch ein Computerprogrammprodukt, durch ein computerlesbares (Speicher)medium, durch ein Verfahren zum Simulieren, durch ein Simulationssystem sowie durch ein weiteres Computerprogramm gelöst. Vorteilhafte Weiterbildungen der vorliegenden Erfindung sind in den abhängigen Ansprüchen angegeben.

Ein erfindungsgemäßes Verfahren dient zum Bereitstellen eines Modells für zumindest eine Maschine, insbesondere eine Werkzeugmaschine. Hierbei wird ein Betrieb der Maschine mittels einer Reglervorrichtung geregelt. Das Verfahren umfasst das Empfangen einer zeitlichen Serie von Messwerten, wobei die Messwerte eine Betriebsgröße der Maschine beschreiben. Darüber hinaus umfasst das Verfahren das Bereitstellen eines untrainierten Modells in Form eines künstlichen neuronalen Netzes. Ferner beinhaltet das Verfahren das Trainieren des untrainierten Modells anhand der empfangenen Messwerte sowie das Bestimmen von abgeleiteten Regelgrößen, welche die Reglervorrichtung beschreiben, mittels des trainierten Modells.

Mit Hilfe des Verfahrens soll ein Modell bereitgestellt werden, welches die Maschine beschreibt. Bei dem Verfahren handelt es sich insbesondere um ein computerimplementiertes Verfahren. Bei der Maschine kann es sich grundsätzlich um eine elektrische Maschine handeln. Insbesondere handelt es sich bei der Maschine um eine Werkzeugmaschine, beispielsweise eine CNC-Maschine. Bei der Maschine kann es sich also um eine CNC-Fräsmaschine, eine CNC-Drehmaschine oder dergleichen handeln. Der Betrieb der Maschine wird mittels der Reglervorrichtung geregelt. Diese Reglervorrichtung kann zumindest einen Regler umfassen. Bevorzugt umfasst die Reglervorrichtung aber eine Mehrzahl von Reglern beziehungsweise Regelkreisen. Mittels der Reglervorrichtung kann eine Betriebsgröße der Maschine geregelt werden. Hierzu kann beispielsweise mittels der Reglervorrichtung ein Ist-Wert für die Betriebsgröße erfasst werden und mit einem Soll-Wert für die Betriebsgröße verglichen werden. Mittels der Reglervorrichtung kann die Betriebsgröße auf den Soll-Wert geregelt werden. Bei der Betriebsgröße der Maschine kann es sich beispielsweise um eine Drehzahl, eine Drehrichtung, ein Drehmoment, einen Vorschub, eine elektrische Spannung, einen elektrischen Strom oder dergleichen handeln.

Mit einer entsprechenden Erfassungseinrichtung beziehungsweise mit einem Sensor kann nun die zeitliche Serie beziehungsweise Abfolge von Messwerten bereitgestellt werden. Dabei beschreiben die Messwerte zumindest eine Betriebsgröße der Maschinen. Die Messwerte können auch mehrere Betriebsgrößen der Maschine beschreiben. Es kann auch vorgesehen sein, dass mehrere beziehungsweise unterschiedliche Messwerte erfasst werden. Um die zeitliche Serie der Messwerte bereitzustellen, kann ein Sensorsignal von dem Sensor beziehungsweise der Erfassungseinrichtung entsprechend abgetastet werden. Diese abgetasteten Messwerte können dann entsprechend weiter verarbeitet werden.

Die zeitliche Serie von Messwerten kann einem Trainingssystem zugeführt werden. Dieses Trainingssystem kann dazu verwendet werden, das Modell für die Maschine oder auch für mehrere Maschinen zu bestimmen. Das Trainingssystem kann eine entsprechende Recheneinrichtung aufweisen, mittels welcher das Modell erstellt werden kann. Zu diesem Zweck kann auf der Recheneinrichtung ein entsprechendes Computerprogramm ausgeführt werden. Zum Bestimmen des Modells wird zunächst das untrainierte Modell bereitgestellt. Bei dem untrainierten Modell handelt es sich um ein künstliches neuronales Netz. Zum Bestimmen des Modells beziehungsweise zum Bereitstellen des trainierten Modells kann dieses Modell entsprechend trainiert werden. Hierbei wird als Trainingsdaten die zeitliche Serie der Messwerte verwendet. Nach dem Trainieren kann das trainierte Modell, welches den geregelten Betrieb der elektrischen Maschine beschreibt, ausgegeben werden.

Wie zuvor erläutert, handelt es sich bei dem Modell um ein künstliches neuronales Netz. Dieses künstliche neuronale Netz kann auch als künstliches neuronales Netzwerk oder als neuronales Netzwerk bezeichnet werden. Ein künstliches neuronales Netz ist durch künstliche Neuronen beziehungsweise Knoten gebildet, die miteinander verbunden sind. Dabei können die Verbindungen direkte Verbindungen zwischen zwei Knoten bereitstellen. Bei dem künstlichen neuronalen Netz können die jeweiligen Knoten in jeweiligen Schichten beziehungsweise verborgenen Schichten angeordnet sein. Beispielsweise können die Knoten in mehreren Schichten hintereinander angeordnet sein. Grundsätzlich weist das künstliche neuronale Netz eine Eingabeschicht und eine Ausgabeschicht sowie die dazwischen liegenden verdeckten Schichten auf. Um das untrainierte Modell bereitzustellen, kann zunächst das künstliche neuronale Netz konstruiert werden. Dabei kann die Topologie des künstlichen neuronalen Netzes beziehungsweise die Zuordnung von Verbindungen zu Knoten für den Anwendungsfall bereitgestellt werden.

Nach der Konstruktion des künstlichen neuronalen Netzes kann die Trainingsphase erfolgen, in welcher das künstliche neuronale Netz trainiert wird. Für das Trainieren des künstlichen neuronalen Netzes werden diesem die Trainingsdaten zugeführt. In dem vorliegenden Fall können dem künstlichen neuronalen Netzwerk beziehungsweise dem untrainierten Modell als Trainingsdaten die zeitliche Abfolge von Messwerten und gegebenenfalls Daten zur Regelungstheorie bereitgestellt werden. Bei dem Trainieren des künstlichen neuronalen Netzwerks können neue Verbindungen entwickelt werden und/oder existierende Verbindungen gelöscht werden. Es kann auch vorgesehen sein, dass entsprechende Gewichtungen beziehungsweise Gewichtungsfaktoren der Knoten beziehungsweise Neuronen angepasst werden. Außerdem können Knoten hinzugefügt und/oder entfernt werden. Das Training kann dabei als überwachtes beziehungsweise beaufsichtigtes Lernen durchgeführt werden. In diesem Fall wird dem neuronalen Netz die Ausgabe vorgegeben. Es kann aber auch vorgesehen sein, dass bei dem Training ein nicht überwachtes beziehungsweise unbeaufsichtigtes Lernen durchgeführt wird. In diesem Fall wird die Ausgabe nicht vorgegeben. Ferner kann das bestärkende Lernen während der Trainingsphase verwendet werden.

Das trainiert Modell beschreibt den Betrieb der Maschine, der mittels der Reglervorrichtung geregelt wird. Mittels des trainierten Modells beziehungsweise des künstlichen neuronalen Netzes können nun nach dem Training Regelparameter beziehungsweise Regelgrößen, welche die Reglervorrichtung beschreiben, abgeleitet werden. Diese abgeleiteten Regelgrößen können beispielsweise eine Übertragungsfunktion der Reglervorrichtung beschreiben. Insbesondere können die Regelgrößen einen Typ der Reglervorrichtung beziehungsweise von einzelnen Reglern der Reglervorrichtung beschreiben. Hierbei ist insbesondere vorgesehen, dass mittels des trainierten Modells beziehungsweise des künstlichen neuronalen Netzes anhand des zeitlichen Verlaufs der Messwerte erkannt wird, wie die Betriebsgröße der Maschine geregelt wird. Es soll also erkannt werden, auf welche Weise die Betriebsgröße durch den Regler beeinflusst wird. Im einfachsten Fall kann somit beispielsweise erkannt werden, ob die Übertragungsfunktion der Reglervorrichtung ein proportionales Übertragungsverhalten, ein integratives Übertragungsverhalten, ein differenzierendes Übertragungsverhalten und/oder ein zeitlich verzögerndes Übertragungsverhalten aufweist. Somit kann mit Hilfe des trainierten Modells das Reglerverhalten der Reglervorrichtung abgeleitet werden. Somit können auf einfache und dennoch zuverlässige Weise zusätzliche Informationen über die Reglervorrichtung erhalten werden.

Bevorzugt wird das Bestimmen der abgeleiteten Regelgrößen auf Grundlage von Regelungstheoriedaten durchgeführt, wobei die Regelungstheoriedaten Funktionsweisen von Reglervorrichtungen beschreiben. Die Regelungstheoriedaten können bekannten Verfahren der Regelungstechnik beschreiben. Insbesondere können die Regelungstheoriedaten unterschiedliche Übertragungsfunktionen von Reglern beschreiben. Diese Übertragungsfunktion kann das Verhältnis der Eingangsgröße zu der Ausgangsgröße beschreiben. Die zeitliche Serie von Messwerten kann die Ausgangsgröße beschreiben. Es kann auch vorgesehen sein, dass die Ausgangsgröße aus den Messwerten abgeleitet werden kann. Die Regelungstheoriedaten können die unterschiedlichen bekannten Übertragungsfunktionen, die in Reglern beziehungsweise Reglervorrichtungen üblicherweise verwendet werden, beschreiben. Wie bereits erläutert, kann die Übertragungsfunktion proportionales Verhalten, ein integratives Verhalten, ein differenzierendes Verhalten, ein zeitverzögerndes Verhalten, eine Regelung mit Totzeit oder entsprechende Kombinationen davon beschreiben. Diese Regelungstheoriedaten können dem untrainierten Modell beziehungsweise dem künstlichen neuronalen Netzwerk als Trainingsdaten zugeführt werden. Im Training können dann die zeitlichen Verläufe der Messwerte den entsprechenden Übertragungsfunktionen zugeordnet werden. Somit können auf einfache und zuverlässige Weise die Regelungstheoriedaten ermittelt werden.

In einer weiteren Ausführungsform weist das künstliche neuronale Netz, welches trainiert wird, eine Mehrzahl von verborgenen Schichten auf. Mit anderen Worten handelt es sich bei dem neuronalen Netz um ein so genanntes Deep Neuronal Network. Ein solches mehrschichtiges künstliches neuronales Netz umfasst in der Ausgabeschicht auch mehrere verdeckte Schichten, deren Ausgabe außerhalb des Netzes nicht sichtbar ist. Mit einem derartigen künstlichen neuronalen Netzwerk kann ein tiefgehendes Lernen beziehungsweise Deep Learning ermöglicht werden. Somit kann das Modell beziehungsweise das künstliche neuronale Netz auf zuverlässige Weise trainiert werden, sodass es den Betrieb der geregelten Maschine beschreibt.

Weiterhin ist es vorteilhaft, wenn die Messwerte unterschiedliche Betriebszustände der Maschine beschreiben. Die unterschiedlichen Betriebszustände können beispielsweise eine Veränderung der Drehzahl der elektrischen Maschine beschreiben. In diesem Fall können unterschiedliche Betriebszustände beispielsweise das Anfahren der Maschine, ein Verändern der Drehzahl, eine Veränderung des Schubs, die Verwendung von unterschiedlichen Werkzeugen oder dergleichen beschreiben. Durch die Erfassung dieser unterschiedlichen Betriebszustände kann der Einfluss der Regelung beziehungsweise der Reglervorrichtung genauer untersucht werden. Mit anderen Worten können unterschiedliche Betriebszustände erfasst werden und das Regelverhalten hierauf ermittelt werden. Dies ermöglicht ein zuverlässiges Training des Modells.

Es kann auch vorgesehen sein, dass bei der Bestimmung des Modells entsprechende Soll-Werte der Reglervorrichtung berücksichtigt werden. Diese Soll-Werte können beispielsweise durch eine entsprechende Bedienung der Maschine vorgegeben werden. Es kann auch vorgesehen sein, dass diese Soll-Werte entsprechend erfasst werden. Die jeweiligen Soll-Werte können beim Trainieren des Modells beziehungsweise des künstlichen neuronalen Netzwerks berücksichtigt werden beziehungsweise als Trainingsdaten verwendet werden. Somit kann hergeleitet werden, wie die Betriebsgröße der Maschine mittels der Reglervorrichtung auf den Soll-Wert geregelt wird. Hieraus können dann die Regelgrößen abgeleitet werden.

In einer weiteren Ausgestaltung wird eine zeitliche Serie von Messwerten einer weiteren Maschine, deren Betrieb mit einer weiteren Reglervorrichtung geregelt wird, empfangen. Zudem wird das trainierte Modell bevorzugt anhand der Messwerte der weiteren Maschine mittels Transfer-Lernen erweitert. Im Bereich des maschinellen Lernens ist das so genannte Transfer-Lernen grundsätzlich bekannt. Hierbei wird ein Modell, welches auf eine bestimmte Anwendung trainiert ist, auf eine ähnliche Anwendung angewendet. Beispielsweise kann ein Modell, dass auf die Detektion von Objekten trainiert ist, dahingehend weiter trainiert werden beziehungsweise erweitert werden, sodass dieses entsprechende Maschinen beziehungsweise Maschinetypen erkennen kann.

In dem vorliegenden Fall wird das Modell, das auf Grundlage der Zeitserien der Maschine beziehungsweise einer ersten Maschine trainiert ist, mit den Zeitserien der weiteren Maschine beziehungsweise einer zweiten Maschine erweitert. Bei der Maschine kann es sich beispielsweise um eine erste Maschine eines Herstellers handeln und bei der weiteren Maschine kann es sich um eine zweite Maschine beziehungsweise um eine ähnliche Maschine des gleichen Herstellers handeln. Das trainierte Modell kann schon stabil sein. Dieses trainierte Modell kann durch die Messwerte der weiteren Maschine erweitert werden. Wenn nun dem bereits trainierten Modell die zeitliche Folge der Messwerte der weiteren Maschine zugeführt werden, kann das Transfer-Lernen durchgeführt werden. In diesem Fall kann das Modell beispielsweise an die sich ändernden Messwerte beziehungsweise Parameter angepasst werden. Falls beispielsweise für das Modell ein neuronales Netz mit mehreren verborgenen Schichten verwendet wird, können die jeweiligen Gewichte an die geänderten Parameter angepasst werden. Somit kann ein bereits erstelltes Modell für die Maschine durch das Transfer-Lernen auch für die weitere Maschine verwendet werden. Dies bietet auch die Möglichkeit ein Referenzmodell für eine Maschine bereitzustellen, welches dann durch Transfer-Lernen auf die spezifische Maschine angepasst werden kann.

Hierbei ist insbesondere vorgesehen, dass weitere abgeleitete Regelgrößen, welche die weitere Reglervorrichtung beschreiben, anhand des erweiterten trainierten Modells bestimmt werden. Das erweiterte trainiert Modell, dass durch Transfer-Lernen auf Grundlage des trainierten Modells erstellt wurde, kann nun dazu verwendet werden, die Regelgrößen der weiteren Reglervorrichtung, mittels welcher die weitere Maschine geregelt wird, abzuleiten. Insbesondere wenn das trainierte Modell bereits vorhanden ist, kann mit geringem Aufwand durch das Transfer-Lernen das erweiterte trainierte Modell bereitgestellt werden. Hieraus können dann die Eigenschaften der weiteren Reglervorrichtung abgeleitet werden.

Ein erfindungsgemäßes Trainingssystem umfasst eine erste Schnittstelle zum Empfangen einer zeitlichen Serie von Messwerten einer Maschine. Darüber hinaus umfasst das Trainingssystem eine Recheneinrichtung zum Bestimmen eines trainierten Modells anhand der empfangenen Messwerte. Schließlich umfasst das Trainingssystem eine zweite Schnittstelle zum Ausgeben des trainierten Modells. Das Trainingssystem kann beispielsweise durch einen entsprechenden Computer bereitgestellt werden. Dieses Trainingssystem kann über die erste Schnittstelle der Maschine beziehungsweise einem Sensor der Maschine, mittels welchem die Messwerte bereitgestellt werden, zur Datenübertragung verbunden werden. Auf einer Recheneinrichtung des Trainingssystems kann dann ein entsprechendes Computerprogramm ausgeführt werden, um das Modell auf Grundlage der Messwerte zu trainieren. Mit Hilfe des Trainingssystems kann das erfindungsgemäße Verfahren zum Bereitstellen des Modells durchgeführt werden.

Ein erfindungsgemäßes Computerprogramm umfasst Befehle, die bei der Ausführung des Programms durch ein Trainingssystem beziehungsweise eine Recheneinrichtung des Trainingssystems dieses beziehungsweise diese veranlassen, das erfindungsgemäße Verfahren sowie die vorteilhaften Ausgestaltungen davon auszuführen.

Ein erfindungsgemäßes computerlesbares (Speicher)medium umfasst Befehle, die bei der Ausführung durch ein Trainingssystem dieses veranlassen, das erfindungsgemäße Verfahren sowie die vorteilhaften Ausgestaltungen davon auszuführen.

Ein weiterer Aspekt der Erfindung betrifft ein Verfahren zum Simulieren eines Betriebs einer Maschine, insbesondere einer Werkzeugmaschine, wobei ein Betrieb der Maschine mittels einer Reglervorrichtung geregelt wird. Hierbei wird der Betrieb der Maschine mit einem Modell, welches mittels eines erfindungsgemäßen Verfahrens zum Bereitstellen eines Modells und/oder der vorteilhaften Ausgestaltungen davon bestimmt wird, modelliert.

Beispielsweise kann das Modell für eine bestimmte Maschine bereitgestellt werden. Um den Betrieb dieser geregelten Maschine nachzubilden, kann das Modell verwendet werden. So kann das Modell beispielsweise auf einem entsprechenden Simulationssystem beziehungsweise einem Rechner oder Computer ausgeführt werden. Auf diese Weise kann der geregelte Betrieb der Maschine simuliert beziehungsweise modelliert werden. Somit kann der Betrieb der Maschine und insbesondere ein Herstellungsverfahren, das mit der Maschine durchgeführt wird, beispielsweise zuvor getestet werden. Damit ist es beispielsweise nicht erforderlich, dass entsprechende Versuche mit der realen Maschine durchgeführt werden. So kann eine Beschädigung von Werkstücken und/oder der Maschine verhindert werden. Ferner kann das Modell für eine Fehleranalyse bei der realen Maschine verwendet werden.

Hierbei ist insbesondere vorgesehen, dass mittels des trainierten Modells ein Betrieb der Reglervorrichtung emuliert wird. Mit dem Modell beziehungsweise mit dem künstlichen neuronalen Netzwerk kann also die Funktion der Reglervorrichtung nachgebildet werden. Auf diese Weise kann überprüft werden, wie die Reglervorrichtung auf bestimmte Eingangsgrößen reagiert. Dadurch können im realen Betrieb der Maschine entsprechende Einstellungen abgeleitet beziehungsweise optimiert werden.

Ein erfindungsgemäßes Simulationssystem dient zum Simulieren eines Betriebs einer Maschine, insbesondere einer Werkzeugmaschine, wobei ein Betrieb der Maschine mittels einer Reglervorrichtung geregelt wird. Dabei ist das Simulationssystem zum Durchführen eines erfindungsgemäßen Verfahrens zum Simulieren eines Betriebs einer Maschine ausgebildet.

Darüber hinaus betrifft die Erfindung ein Computerprogramm, umfassend Befehle, die bei der Ausführung des Programms durch ein Simulationssystem dieses veranlassen, das erfindungsgemäße Verfahren zum Simulieren eines Betriebs einer Maschine auszuführen.

Ein weiterer Aspekt der Erfindung betrifft ein computerlesbares (Speicher)medium, umfassend Befehle, die bei der Ausführung durch ein Simulationssystem dieses veranlassen, ein erfindungsgemäßes Verfahren zum Simulieren eines Betriebs einer Maschine auszuführen.

Mit Bezug auf das erfindungsgemäße Verfahren zum Bereitstellen eines Modells für eine Maschine vorgestellten bevorzugten Ausführungsformen und deren Vorteile gelten entsprechend für das erfindungsgemäße Trainingssystem, für das erfindungsgemäße Computerprogrammprodukt sowie für das erfindungsgemäße computerlesbare (Speicher)medium. Ferner gelten die mit Bezug auf das erfindungsgemäße Verfahren zum Simuliere eines Betriebs einer elektrischen Maschine vorgestellten bevorzugten Ausführungsformen und deren Vorteile entsprechend für das erfindungsgemäße Simulationssystem, das erfindungsgemäße Computerprogrammprodukt sowie für das erfindungsgemäße computerlesbare (Speicher)medium.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: ein schematisches Ablaufdiagramm eines Verfahrens zum Bereitstellen eines Modells für eine Maschine, wobei ein Betrieb der Maschine mittels einer Reglervorrichtung geregelt wird; und
- FIG 2: ein schematisches Ablaufdiagramm eines Verfahrens zum Bestimmen eines Modells für eine Maschine gemäß einer weiteren Ausführungsform.

In den Figuren werden gleiche oder funktionsgleiche Elemente mit den gleichen Bezugszeichen versehen.

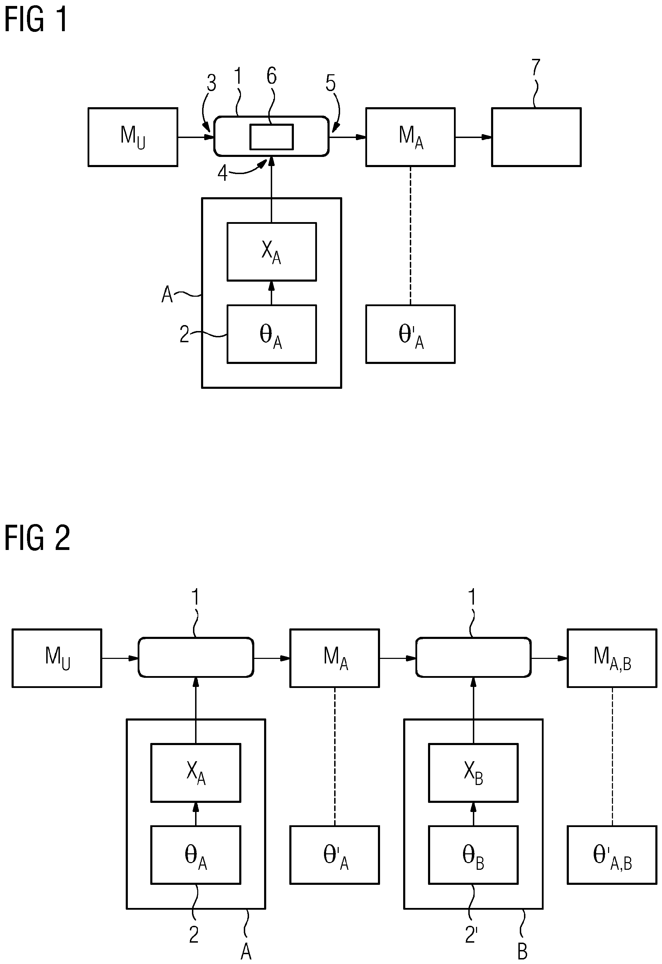

FIG 1 zeigt ein schematisches Ablaufdiagramm eines Verfahrens zum Bereitstellen eines Modells M_{A} für eine Maschine A. bei der Maschine A kann es sich um eine Werkzeugmaschine handeln. Insbesondere handelt es sich bei der Maschine A um eine CNC-Maschine. Dabei wird der Betrieb der Maschine A mittels einer Reglervorrichtung 2 geregelt. Diese Reglervorrichtung 2 kann mehrere Regler beziehungsweise Regelkreise aufweisen.

Das Modell M_{A} für die Maschine A kann mittels eines Trainingssystems 1 bestimmt werden. Dieses Trainingssystem 1 kann durch einen entsprechenden Computer gebildet sein. Vorliegend weist das Trainingssystem 1 eine entsprechende Recheneinrichtung 6 auf. Dem Trainingssystem 1 wird über eine Schnittstelle 3 ein untrainiertes Modell zugeführt. Bei dem untrainierten Modell handelt es sich um ein künstliches neuronales Netz, insbesondere ein so genanntes Deep Neuronal Network. Über eine Schnittstelle 4 werden dem Trainingssystem 1 eine zeitliche Serie von Messwerten X_{A} zugeführt. Diese Werte X_{A} beschreiben Betriebsgrößen der Maschine A. Beispielsweise können die Messwerte X_{A} eine Drehzahl, eine Drehrichtung, ein Drehmoment, eine elektrische Spannung, einen elektrischen Strom oder dergleichen beschreiben. Die Regelung der Maschine A mittels der Reglervorrichtung 2 wird auf Grundlage von Regelgrößen θ_{A} durchgeführt. Diese Regelgrößen θ_{A} sind aber nicht bekannt.

Zum Training des untrainierten Modells Mu können die diesem zudem Regelungstheoriedaten zugeführt werden. Diese Regelungstheoriedaten beschreiben insbesondere Eigenschaften von bekannten Reglervorrichtungen 2. Beispielsweise können die Regelungstheoriedaten unterschiedliche Übertragungsfunktionen, die von Reglervorrichtungen 2 verwendet werden, beschreiben. Während des Trainings des Modells kann anhand des zeitlichen Verlaufs der Messwerte X_{A} beziehungsweise der Betriebsgrößen und den bekannten Regelungstheoriedaten die Eigenschaften der Reglervorrichtung 2 beziehungsweise der Regelalgorithmus der Reglervorrichtung 2 angenähert beziehungsweise ermittelt werden.

Über eine Schnittstelle 5 kann dann von dem Trainingssystem 1 das trainierte Modell M_{A} ausgegeben werden. Auf Grundlage des trainierten Modells M_{A} können dann abgeleitete Regelgrößen θ'_{A} bereitgestellt werden. Die abgeleiteten Regelgrößen θ'_{A} beschreiben die Eigenschaften der Reglervorrichtung 2, die während des Trainings ermittelt wurde. Das trainierte Modell M_{A} beschreibt somit den Betrieb der Maschine A, die mittels der Reglervorrichtung 2 geregelt wird.

FIG 2 zeigt ein schematisches Ablaufdiagramm zum Bestimmen eines Modells M_{A,B} gemäß einer weiteren Ausführungsform. Wie zuvor in Zusammenhang mit FIG 1 erläutert, wird auch hier zunächst das untrainierte Modell Mu auf Grundlage der Messwerte X_{A} der Maschine A trainiert. Nach diesem Training kann das trainierte Modell M_{A} bereitgestellt werden. In diesem Fall wird zusätzlich ein so genanntes Transfer-Lernen durchgeführt. Hierbei wird in einem nachfolgenden Schritt dem Trainingssystem 1 das trainierte Modell M_{A} zugeführt.

Darüber hinaus werden Messwerten X_{B} von einer weiteren Maschine B ermittelt und dem Trainingssystem 1 zugeführt. Dabei wird der Betrieb der weiteren Maschine B mittels einer weiteren Reglervorrichtung 2' geregelt. Die Maschinen A und B können beispielsweise von dem gleichen Hersteller stammen und unterschiedliche beziehungsweise ähnliche Typen von Maschinen sein. Auf Grundlage der Messwerte X_{B} der weiteren Maschine B kann dann das trainierte Modell M_{A} erweitert werden und das erweiterte trainierte Modell M_{A,B} mittels des Trainingssystems 1 ausgegeben werden. Dieses erweiterte trainierte Modell M_{A,B} kann wiederum dazu verwendet werden, abgeleitete Regelgrößen θ'_{A'}, θ'_{B}, welche auf Grundlage der Reglervorrichtungen 2, 2' der Maschinen A, B ermittelt wurde, bestimmt werden.

Das trainierte Modell M_{A} beziehungsweise das erweiterte trainierte Modell M_{A,B} kann dazu verwendet werden, den Betrieb der Maschine A, B zu simulieren. Hierzu kann das Modell M_{A}, M_{A,B} auf einem entsprechenden Simulationssystem 7 beziehungsweise Computer zum Ablauf gebracht werden. Dies ist schematisch in FIG 1 dargestellt. Somit kann der Betrieb der Maschine A, B, der durch die Reglervorrichtung 2, 2' geregelt wird, simuliert beziehungsweise nachgebildet werden. Somit können Informationen über die üblicherweise nicht bekannte Funktionsweise der komplexen Reglervorrichtung 2, 2' gewonnen werden. Dies ermöglicht es insgesamt den Betrieb der Maschine A, B zu optimieren und Fehler zu vermeiden.

## Patentansprüche

1. Verfahren zum Bereitstellen eines Modells (M_{A}, M_{A,B}) für zumindest eine Maschine (A, B), insbesondere eine Werkzeugmaschine, wobei ein Betrieb der Maschine (A) mittels einer Reglervorrichtung (2) geregelt wird, mit den Schritten:
- Empfangen einer zeitlichen Serie von Messwerten (X_{A}), wobei die Messwerte (X_{A}) eine Betriebsgröße der Maschine (A) beschreiben,
- Bereitstellen eines untrainierten Modells (M_{U}) in Form eines künstlichen neuronalen Netzes,
- Trainieren des untrainierten Modells (M_{U}) anhand der empfangenen Messwerte (X_{A}) und
- Bestimmen von abgeleiteten Regelgrößen (θ'_{A}), welche die Reglervorrichtung (2) beschreiben, mittels des trainierten Modells (M_{A}).

2. Verfahren nach Anspruch 1, **dadurch gekennzeichnet, dass** das Bestimmen der abgeleiteten Regelgrößen (θ'_{A}) auf Grundlage von Regelungstheoriedaten durchgeführt wird, wobei die Regelungstheoriedaten Funktionsweisen von Reglervorrichtungen (2) beschreiben.

3. Verfahren nach Anspruch 1 oder 2, **dadurch gekennzeichnet, dass** künstliche neuronale Netz, welches trainiert wird, eine Mehrzahl von verborgenen Schichten aufweist.

4. Verfahren nach einem der vorhergehenden Ansprüche, **dadurch gekennzeichnet, dass** die Messwerte (X_{A}) unterschiedliche Betriebszustände der Maschine (A) beschreiben.

5. Verfahren nach einem der vorhergehenden Ansprüche, **dadurch gekennzeichnet, dass** eine zeitliche Serie von Messwerten (X_{B}) einer weiteren Maschine (B), deren Betrieb mit einer weiteren Reglervorrichtung (2') geregelt wird, empfangen werden und das trainierte Modell (M_{A}) anhand der Messwerte (X_{B}) der weiteren Maschine (B) mittels Transfer-Lernen erweitert wird.

6. Verfahren nach Anspruch 5, **dadurch gekennzeichnet, dass** weitere abgeleitete Regelgrößen (θ'_{A,B}), welche die weitere Reglervorrichtung (2') beschreiben, anhand des erweiterten trainierten Modells (M_{A,B}) bestimmt werden.

7. Trainingssystem (1) umfassend:
- eine erste Schnittstelle (4) zum Empfangen einer zeitlichen Serie von Messwerte (X_{A}) einer Maschine (A),
- eine Recheneinrichtung (6) zum Bestimmen eines trainierten Modells (M_{A}) anhand der empfangenen Messwerte (X_{A}), und
- eine zweite Schnittstelle (X_{A}) zum Ausgeben des trainierten Modells (M_{A}).

8. Computerprogramm, umfassend Befehle, die bei der Ausführung des Programms durch ein Trainingssystem (1) dieses veranlassen, das Verfahren nach einem der Ansprüche 1 bis 6 auszuführen.

9. Computerlesbares (Speicher)medium, umfassend Befehle, die bei der Ausführung durch ein Trainingssystem (1) dieses veranlassen, das Verfahren nach einem der Ansprüche 1 bis 6 auszuführen.

10. Verfahren zum Simulieren eines Betriebs einer Maschine (A, B), insbesondere einer Werkzeugmaschine, wobei ein Betrieb der Maschine (A, B) mittels einer Reglervorrichtung (2, 2') geregelt wird, **dadurch gekennzeichnet, dass** der Betrieb der Maschine (A, B) mit einem trainierten Modell (M_{A}, M_{A,B}), welches mittels eines Verfahrens nach einem der Ansprüche 1 bis 6 bestimmt wird, modelliert wird.

11. Verfahren nach Anspruch 10, **dadurch gekennzeichnet, dass** mittels des trainierten Modells (M_{A}, M_{A,B}) ein Betrieb der Reglervorrichtung (2, 2') emuliert wird.

12. Simulationssystem (7) zum Simulieren eines Betriebs einer Maschine (A, B), insbesondere einer Werkzeugmaschine, wobei ein Betrieb der Maschine (A, B) mittels einer Reglervorrichtung (2, 2') geregelt wird, wobei das Simulationssystem (7) zum Durchführen eines Verfahrens nach einem der Ansprüche 10 oder 11 ausgebildet ist.

13. Computerprogramm, umfassend Befehle, die bei der Ausführung des Programms durch ein Simulationssystem (7) dieses veranlassen, das Verfahren nach einem der Ansprüche 10 oder 11 auszuführen.
